(19) Europäisches Patentamt
European Patent Office
Office européen des brevets

(11) **EP 2 993 849 A1**

(12) # EUROPEAN PATENT APPLICATION

(43) Date of publication:
**09.03.2016 Bulletin 2016/10**

(51) Int Cl.:
***H04L 27/26*** *(2006.01)*

(21) Application number: **14306361.8**

(22) Date of filing: **04.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventor: **Bülow, Henning**
**70435 Stuttgart (DE)**

(74) Representative: **2SPL Patentanwälte PartG mbB**
**Postfach 15 17 23**
**80050 München (DE)**

Remarks:
Amended claims in accordance with Rule 137(2) EPC.

(54) **Preprocessing and detection for nonlinear Fourier transform based optical receiver**

(57) In optical transmissions, Nonlinear Fourier Transformation (NFT) are promising as signal description inherently including fiber nonlinearity. A NFT produces two results: a continuous spectral function defined on the real axis and a discrete spectral function defined on the upper half complex plane C+. A Maximum Likelihood Nonlinear Spectrum (ML-NS) detection is proposed which operates on a comparison between the received continuous spectral function output from the NFT and a reference replica. The present invention proposes to remove prior to said comparison, critical parts of the spectrum (peaks). For this, the application also exploits discrete frequency points in the negative complex plane.

Fig. 2

EP 2 993 849 A1

**Description**

Embodiments described in the following relate to receivers, methods and computer programs for a receiver, preferrably to receivers comprised by an optical communication system with an optical communication channel.

Background

This section introduces aspects that may be helpful in facilitating a better understanding of the present disclosure. Accordingly, the statements of this section are to be read in this light and are not to be understood as admissions about what is in the prior art or what is not in the prior art.

Optical fibers are widely used in fiber-optic communications, where they may permit transmission over longer distances and at higher bandwidths or data rates than wire cables. Fibers are used for a variety of applications, including sensors and fiber lasers. They are in some cases used instead of metal wires because signals may travel along them with less loss and are also less prone to some error sources, for example electromagnetic interference. Today the maximum bit-rate which can be transported over an optical fiber of a given length is limited by the nonlinearity of the fiber. An increase of the optical power which should allow the transportation of more information bits in a given spectral range introduces nonlinear distortion. Fiber nonlinearities may arise from several mechanisms. One mechanism that may be detrimental for optical communications arises from the refractive index of glass being dependent on the optical power going through the material (Kerr effect) inducing signal distortion such as four wave mixing (FWM), self-phase modulation (SPM), cross-phase modulation (XPM). Further mechanisms causing nonlinearities in fiber optic systems include stimulated Brillouin scattering (SBS), stimulated Raman scattering (SRS), and intermodulation. Fiber nonlinearities may impose a fundamental limit to the amount of data that can be transmitted on a single optic fiber. On a receiver side these nonlinearities may lead to complex digital signal processing (DSP) steps that may be required to retrieve an originally transmitted signal from a received signal. An approach to overcome the high complexity of receiver sided DSP equalization based on split-step Fourier transformation are detection schemes working with nonlinear Fourier transformation (NFT). These detection schemes may for instance comprise a maximum likelihood nonlinear detection process in the receiver. However, a relatively small shift in a signal spectrum during transmission may already lead to comparably large errors and thus a possibly incorrect signal output.

Summary

Some simplifications may be made in the following summary, which is intended to highlight and introduce some aspects of the various exemplary embodiments, but such simplifications are not intended to limit the scope of embodiments. Detailed descriptions of a preferred exemplary embodiment adequate to allow those of ordinary skill in the art to make and use the inventive concepts will follow in later sections.

According to a first aspect, embodiments provide a receiver comprising a signal transformation circuitry configured to transform a received time-domain signal to a complex frequency domain receive signal. The receiver also comprises a signal detection circuitry configured to estimate a transmitted signal based on a comparison between a hypothetical complex frequency domain transmit signal and the complex frequency-domain receive signal in one or more spectral ranges. The signal detection circuitry is configured to evaluate an imaginary part of the complex frequency domain receive signal and/or the complex hypothetical frequency domain transmit signal to determine the one or more spectral ranges for the comparison. In some embodiments This frequency domain is extended to value ranges with imaginary parts which may not belong to the range required for a physical signal representation (such as discrete frequency points in the negative complex $(\mathbb{C}^-)$ plane). It may thus become possible to improve exactness when estimating a hypothetically sent signal from a received distorted signal. This may present a possibility to improve a bit error ratio of a received signal, or to improve reliability in an optical communication system.

In some embodiments, the signal transformation circuitry is configured to transform the received time-domain signal to the complex frequency domain receive signal using a nonlinear signal transformation.

In one embodiment, the nonlinear signal transformation is a nonlinear Fourier transformation.

In some embodiments, the signal detection circuitry is configured to determine a frequency corresponding to an imaginary part of the complex frequency domain receive signal and/or the complex hypothetical frequency domain transmit signal below a predefined threshold.

In one or more embodiments, the signal detection circuitry is configured to exclude a predefined spectral range around the determined frequency from the spectral ranges for the comparison.

In some embodiments, the determined frequency corresponds to a complex number value and the excluded spectral range lies within a predefined radius around the complex number value.

In one embodiment, the imaginary part is negative or has a negative sign.

In some embodiments, the signal detection circuitry is configured to determine a first frequency point of the complex frequency domain receive signal corresponding to a first complex number value, a second frequency point of the complex hypothetical frequency domain transmit signal corresponding to a second complex number value, and an Euclidean distance between the first and second frequency points for the comparison. Optionally, at least one of the frequency points may have an imaginary part which is negative.

In some further embodiments, the signal detection circuitry is configured to determine a third frequency point of a further complex hypothetical frequency domain transmit signal corresponding to a third complex number value. The signal detection circuitry is further configured to provide the complex hypothetical frequency domain transmit signal or the further complex hypothetical frequency domain transmit signal based on a comparison of the Euclidean distance between the first and second frequency points with an Euclidean distance between the first and third frequency points.

In one or more embodiments, the signal detection circuitry is configured to exclude a predefined spectral range from the spectral ranges for the comparison if a difference between the hypothetical complex frequency domain transmit signal and the complex frequency-domain receive signal within the predefined spectral range exceeds a predetermined threshold. The predetermined threshold is a threshold of an imaginary part or alternatively of amplitude at this respective frequency.

In some embodiments, the signal detection circuitry is configured to determine an integrated value of a difference between the hypothetical complex frequency domain transmit signal and the complex frequency-domain receive signal in the one or more spectral ranges for the comparison.

In some further embodiments, the signal detection circuitry is configured to determine a further integrated value of a difference between a further complex hypothetical frequency domain transmit signal and the complex frequency-domain receive signal in the one or more spectral ranges. The signal detection circuitry is further configured to provide the hypothetical complex frequency domain transmit signal or the further complex hypothetical frequency domain transmit signal based on a comparison of the integrated value with the further integrated value.

According to a further aspect, embodiments provide an optical communication system, comprising an optical transmission channel and the aforementioned receiver coupled to the optical transmission channel.

According to yet a further aspect, it is provided a method for a receiver. The method comprises transforming a received time-domain signal to a complex frequency domain receive signal. The method also comprises estimating a transmitted signal based on a comparison between a hypothetical complex frequency domain transmit signal and the complex frequency-domain receive signal in one or more spectral ranges. The method further comprises evaluating an imaginary part of the complex frequency domain receive signal and/or the complex hypothetical frequency domain transmit signal to determine the one or more spectral ranges for the comparison. This may improve the correctness of a signal provided to a user as the received signal. Said method may in some cases be applied while avoiding use of additional hardware.

Some embodiments comprise a computer readable storage medium storing instructions which, when executed by a computer, cause the computer to implement the method described herein, or a digital control circuit installed within the apparatus for performing the method. Such a digital control circuit, e.g. a digital signal processor (DSP), needs to be programmed accordingly. Hence, yet further embodiments also provide a computer program having a program code for performing embodiments of the method, when the computer program is executed on a computer or a digital processor.

Brief description of the Figures

Some embodiments of apparatuses and/or methods will be described in the following by way of example only, and with reference to the accompanying figures, in which

Fig. 1            shows a block diagram of calculation steps of a nonlinear Fourier transformation according to a conventional solution;

Fig. 2            shows a further block diagram of a signal detection scheme according to a conventional solution;

Figs. 3a and b    show continuous spectrum and frequency points of discrete spectra of a received signal and a reference signal according to a conventional solution;

Fig. 4            shows a block diagram of a receiver according to an embodiment;

Fig. 5            show continuous spectrum and frequency points of discrete spectra of a received signal and a reference signal according to an embodiment;

Figs. 6a, b and c    show graphical illustrations of a signal processing principle according to an embodiment;

Fig. 7          shows a table comparing exemplary bit error ratios for a conventional method and a method according to an embodiment;

Fig. 8          shows discrete frequency points of a received signal and a reference signal according to an embodiment; and

Fig. 9          shows a flow chart of a method for a receiver according to an embodiment.

<u>Description of Embodiments</u>

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of embodiments. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

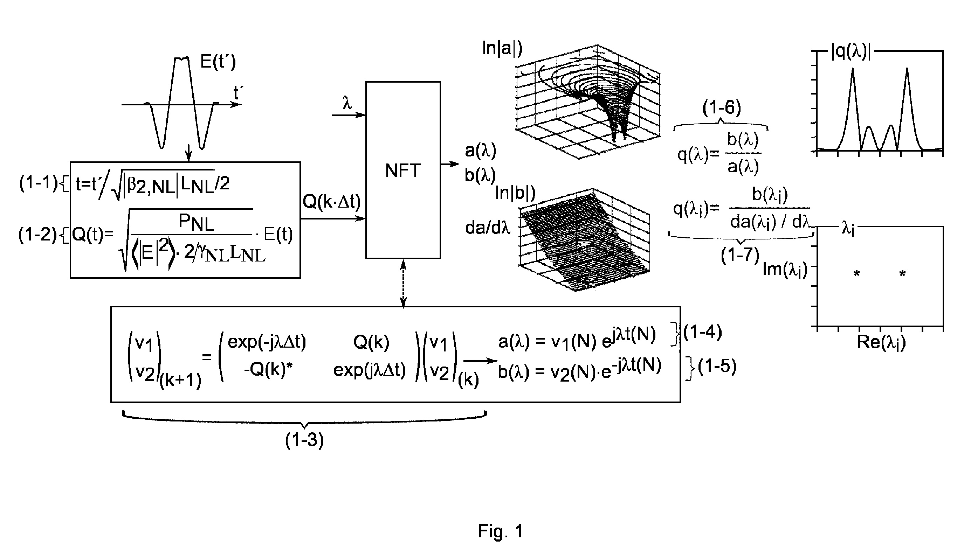

Fig. 1 provides an overview of mathematical operations comprised by a nonlinear Fourier transform (NFT) according to a conventional solution. E(t') is a coherently detected optical signal, wherein t' is a time-related variable. Due to the abovementioned effects of nonlinearity the detected signal undergoes distortion, which is resolved by transforming into the nonlinear frequency domain. This transformation comprises different steps. First the time t' is transformed to a modified temporal variable t via equation (1-1), and signal E(t') to a modified signal Q(t) via eq. (1-2). Therein, $\beta_{2,NL}$ denotes a dispersion coefficient of an ideal fiber channel, $\gamma_{NL}$ a nonlinear coefficient of the fiber channel, $L_{NL}$ a length of the fiber channel, and $P_{NL}$ a mean signal power.

The NFT input parameters comprise frequency $\lambda$ at which the spectral amplitude q shall be calculated or the existence of a discrete frequency point $\lambda_i$ shall be evalutated and samples of the modified signal Q(t) at sampling points t=k·$\Delta$t, wherein k denotes an index number running from 0 to N and small $\Delta$t is a time interval. The NFT is performed according to an iterative principle with k running from 0 to N which is described in eq. (1-3) and is known as the Ablowitz-Ladik method. A signal vector ($v_1$, $v_2$) for iteration step k+1 may be obtained from a preceding signal vector ($v_1$, $v_2$) for iteration step k. From the two elements $v_1$ and $v_2$ of this vector obtained after the iteration step N, two spectral coefficients a($\lambda$) and b($\lambda$) may be obtained using eq. (1-4) and (1-5), respectively, with $j = \sqrt{-1}$ being the complex number. The logarithms of a($\lambda$) and b($\lambda$) are shown as three-dimensional contour plots in the center of Fig.1. Inserting a($\lambda$) and b($\lambda$) in eq. (1-6) leads to the amplitudes q($\lambda$) of the continuous spectrum for continous frequencies $\lambda$ along the real axis of the complex plane and q($\lambda_i$) at the discrete frequency points.

The nonlinear Schrödinger equation (NLSE)

$$\frac{\partial E}{\partial z'} - j\frac{\beta_2}{2}\frac{\partial^2 E}{\partial t'^2} + j\gamma\, E\cdot|E|^2 = 0 \tag{1}$$

describes the propagation of the slow varying complex field envelope E(t',z') of a wave in a lossless optical fiber ($\alpha$=0dB/km) with the instantaneous Kerr nonlinearity coefficient $\gamma$ and group velocity dispersion dispersion coefficient $\beta_2$. 1.32-$W^{-1}km^{-1}$ and -22-$ps^2$ are typical values for $\gamma$ and $\beta_2$, respectively, belonging to a standard single mode fiber (SSMF) with zero loss and a dispersion coefficient of D = 17-ps/nm/km. Normalization of this equation is obtained by defining a characteristic time To= -$\beta_2 L_{NL}$/2 and characteristic power Po = 2/($\gamma L_{NL}$) corresponding to a dispersion length and a nonlinear length $L_{NL}$ both equal to the length of the fiber link. In addition, since the power of the received optical field E(t) may be considered as unknown, it is denoted by $P_{NL}$ and regarded as a NFT transformation parameter which has to be defined. With this the NLSE for a lossless fiber with GVD in normalized form

$$\frac{\partial q}{\partial z} + j\frac{\partial^2 E}{\partial t^2} + j\,2q\cdot|q|^2 = 0$$

is obtained. Therein, the field E with assumed power $P_{NL}$ is normalized by Po and yields the normalized field envelope q(t)

$$q(t) = \sqrt{P_{NL}\cdot\gamma_{NL}L_{NL}/2}\cdot E(t)\Big/\Big\langle|E|^2\Big\rangle\ ,$$

the time t' is normalized to To and the length coordinate z is running from 0 to 1 along the fiber of length $L_{NL}$, wherein

$$t = t'\Big/\sqrt{|\beta_{2,NL}|L_{NL}/2} \qquad\qquad z = z'/L_{NL} \qquad .$$

Opposite to the conventional linear Fourier transformation where the waveform E(t') with its average power P=$\langle|E|^2\rangle$ is sufficient to determine the spectrum E($\omega$), the NFT requires the channel parameter $\beta_{2,NL}$ and $\gamma_{NL}$ in addition. Moreover, following the Ablowitz-Ladik method, the complex spectral amplitude q($\lambda$) at a frequency point $\lambda$ is determined in three computational steps. Firstly, the vector v = (v$_1$ v$_2$)$^T$ is iteratively determined by walking in small steps $\Delta$t along the normalized time domain signal Q(t) = q(t)·$\Delta$t

$$\begin{pmatrix} v_1 \\ v_2 \end{pmatrix}_{(k+1)} = A_{(k)}\begin{pmatrix} v_1 \\ v_2 \end{pmatrix}_{(k)}$$

with

$$A_{(k)} = \left(1+|Q(k)|^2\right)^{-1}\begin{pmatrix} \exp(-j\lambda\Delta t) & Q(t_{(k)}) \\ -Q(t_{(k)})^* & \exp(j\lambda\Delta t) \end{pmatrix}$$

with the start vector v'(k=0) = (1 0)T · exp(-j$\lambda$t$_{(0)}$).
Then, secondly, after having moved through the signal Q(t$_{(k)}$) by t$_{(k)}$=t$_0$+k·$\Delta$t (k=0...N) in steps $\Delta$t, the spectral coefficients a($\lambda$) and b($\lambda$) are determined using the vector v(k=N):

$$a(\lambda) = v_1(N)\cdot e^{j\lambda t(N)} \qquad\text{and}\qquad b(\lambda) = v_2(N)\cdot e^{-j\lambda t(N)} \qquad .$$

Thirdly, the spectral amplitude q($\lambda$) is determined by the ratio of the spectral coefficients:

$$q_c(\lambda) = \frac{b(\lambda)}{a(\lambda)}$$

The discrete frequency points may be found by applying a search on zeros of $|a(\lambda)|$ using a Newton-Raphson update, the calculation of $q(\lambda_i)$ needs an extension of (1-3). The discrete amplitude

$$q(\lambda_i) = \frac{b(\lambda_i)}{da(\lambda_i)/d\lambda}$$

demands the knowledge of $da/d\lambda$, which requires a vector element $v_1'(N)$ which is obtained by a further calculation

$$\begin{pmatrix} v_1' \\ v_2' \end{pmatrix}_{(k+1)} = A'_{(k)} \begin{pmatrix} v_1 \\ v_2 \end{pmatrix}_{(k)} + A_{(k)} \begin{pmatrix} v_1' \\ v_2' \end{pmatrix}_{(k)}$$

performed in parallel to the iteration of $v(N)$ with the matrix

$$A'_{(k)} = \begin{pmatrix} -j\Delta t \exp(-j\lambda\Delta t) & 0 \\ 0 & j\Delta t \exp(j\lambda\Delta t) \end{pmatrix}$$

already described above. As starting value for the iteration $v'(k=0) = (-jt_{(0)}\ 0)^T \cdot \exp(-j\lambda t_{(0)})$ may be taken. The matrix $A(k)$ denotes the matrix of (1-3):

$$A_{(k)} = \left(1 + |Q(k)|^2\right)^{-1} \begin{pmatrix} \exp(-j\lambda\Delta t) & Q(t_{(k)}) \\ -Q(t_{(k)})^* & \exp(j\lambda\Delta t) \end{pmatrix}.$$

It is to be noted that the first factor in this product is a normalization (not shown in (1-3)) and may lead to a better numerical accuracy of the iteration with k=1...N.

In an NFT based receiver samples of the coherently detected optical signal E(t') are transformed into two parts of a nonlinear spectrum. A first part is a continuous part which is the amplitude $q(\lambda)$ over the nonlinear frequency $\lambda$ (see upper right drawing in Fig.1), and can be obtained from eq. (1-6). The continuous part corresponds to a real part of the frequency spectrum. A second part is a discrete part of the spectrum which are isolated nonlinear frequency points $\lambda_i$ in the upper complex plane (see lower right drawing in Fig.1) with the amplitude $q(\lambda_i)$. The frequency points, if existing, may be found by a zero search of the spectral coefficient $a(\lambda)$ for $\lambda$ in the complex plane. The corresponding amplitude $q(\lambda_i)$ may be obtained from eq. (1-7) using the derivative of $a(\lambda)$ by frequency $\lambda$ according to the aforementioned calculation rules.

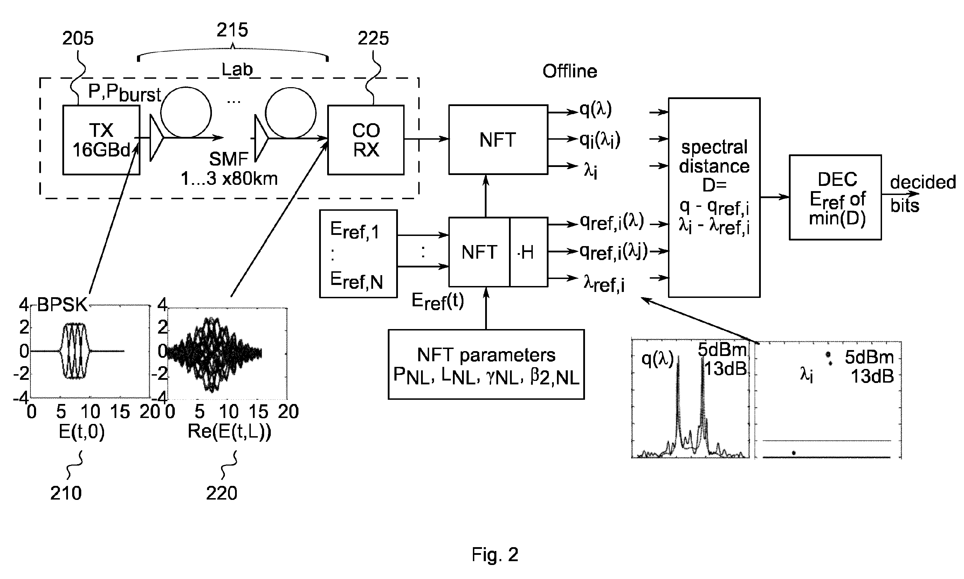

Fig. 2 schematically displays a signal detection scheme as is conventionally done in a maximum likelihood nonlinear detection process. A transmitter 205 sends a transmit signal 210 (E(t,0)) through an optical fiber 215, which in an example has a length between 80 and 240 km. Transmit signal 210 undergoes notable distortion while passing fiber 215, and is received as a receive signal 220 (Re(E(t,L))) by a receiver 225.

Receive signal 220 is transformed with the NFT described in Fig. 1. A multitude of expected signals $E_{ref,1}$ ... $E_{ref,N}$ is transformed likewise, wherein in the nonlinear frequency domain propagation is described by multiplication with the allpass-like transfer function $H(\lambda) = \exp(-4j\cdot\lambda 2\cdot z/L)$. The NFT in both cases uses the optical fiber parameters $\beta_{2,NL}$, $\gamma_{NL}$, $L_{NL}$, and $P_{NL}$. Thus, the continuous frequency domain signal $q(\lambda)$, the discrete frequency domain signal $q_i(\lambda_i)$, and discrete frequency point $\lambda_i$, as well as a multitude of hypothetical continuous frequency domain signals $q_{ref,i}(\lambda)$, hypothetical discrete frequency domain signals $q_{ref,i}(\lambda_i)$, and discrete frequency point $\lambda_{ref,i}$ can be obtained. The received continuous spectrum and frequency point are compared with each hypothetical continuous spectrum and frequency point, which results in a differential value called the spectral distance D. From the multitude of results for D, with each result corresponding to a distinct hypothetical signal, the minimum value of all D decides which hypothetical signal is most likely corresponding to the original transmit signal 210. Or, in other words, in a receiver deciding on the received signal by maximum likelihood nonlinear spectrum (ML-NS) detection, as shown in Fig.2, the decision is drawn if the received signal spectrum q is close to a reference spectrum $q_{ref}$, i.e. the mean difference of the continuous spectrum $<(q-q_{ref,i})^2>$ is minimum or of the discrete frequency points $\sum(\lambda_j-\lambda_{j,ref,i})^2$ is minimum or of the discrete amplitudes $<q(\lambda_j)-q_{ref,i}(\lambda_j))^2>$ at these discrete frequency points $(\lambda_j)$ is minimum or a combination of two or three of these three mean differences is minimum.

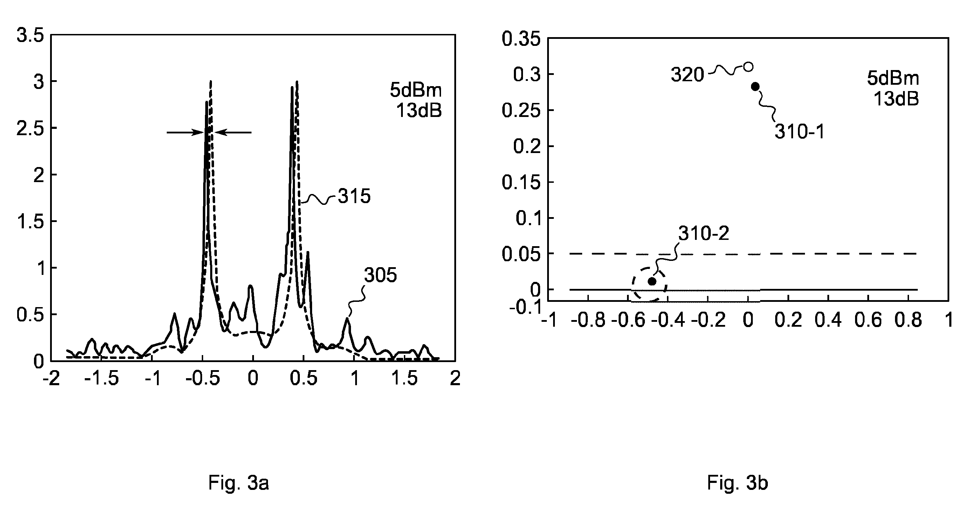

The continuous and discrete spectra for receive signal and one exemplary hypothetical signal (which, in the following, is also denoted as "reference signal") are displayed in the lower right graphs in Fig. 2. Fig. 3a and b show said graphs in an enlarged view. Therein, Fig. 3a displays the continuous spectrum with amplitude on the y-axis and a frequency on the x-axis. The frequency is a complex number, of which the real part is plotted along the x-axis. Fig. 3b displays the frequency points $\lambda_j$ of the discrete spectrum, with the real part of said frequency plotted on the x-axis and the imaginary part plotted on the y-axis. A challenge of this detection concept may become visible when working with realistic signals including noise and transmitted over fiber spans with loss. The solid line 305 and the two dots 310-1; 310-2 are the continuous and discrete spectrum of a signal transported over three spans of 80-km SMF fiber whereas the dashed line 315 and the circlet 320 correspond to the same signal, but noise-free (in other words, to the transmit signal), and the nonlinear transmission calculated by NFT. Since these reference spectra serve as reference for detection, ideally they should have only a small difference to the received signal's spectra (depending on noise load or mismatch of NFT model parameters).

However, in cases where the continuous spectra exhibit some kind of peaks, as shown by Fig.3a, the mean difference between the received signal spectrum (solid line 305) and the red reference spectrum (dashed line 315) may be strongly different from 0 due to a shift along the x-axis indicated by two arrows. In other words, a slight shift of peak positions may result in a strong error in mean difference $<(q-qref,i)^2>\lambda$ between the received noisy signal's continuous $|q(\lambda)|$ spectrum and reference signal spectrum. A further origin of error could be that the received signal discrete spectrum has additional discrete frequency points, as shown by a dot 310-2 surrounded by a dashed circle in Fig.3b

In embodiments additional DSP processing is proposed which improves the performance (sensitivity) of the receiver. It proposes a further processing of the nonlinear signal spectra at the NFT output, prior to the maximum likelihood nonlinear detection process in the receiver.

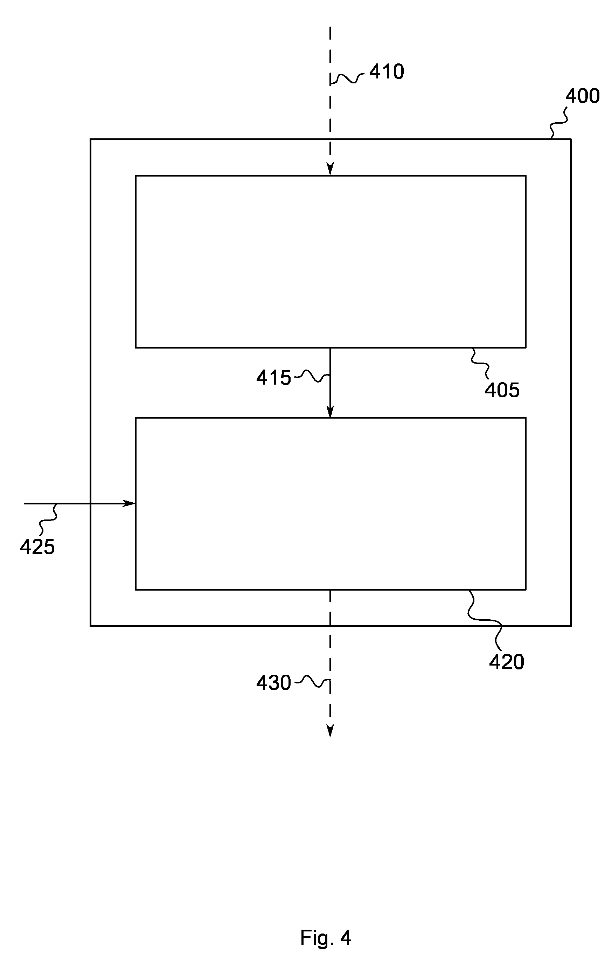

Fig. 4 shows a block diagram of a receiver 400 according to an embodiment. Receiver 400 comprises a signal transformation circuitry 405 configured to transform a received time-domain signal 410 to a complex frequency domain receive signal 415. The receiver also comprises a signal detection circuitry 420 configured to estimate a transmitted signal based on a comparison between a hypothetical complex frequency domain transmit signal 425 and the complex frequency-domain receive signal 415 in one or more spectral ranges. The signal detection circuitry 420 is configured to evaluate an imaginary part of the complex frequency domain receive signal 415 and/or the complex hypothetical frequency domain transmit signal 425 to determine the one or more spectral ranges for the comparison.

Signal transformation circuitry 405 and signal detection circuitry 420 may be comprised by separate entities or in a common structure. Said common structure may for example comprise a processor, microcontroller or other programmable hardware component. One or more hypothetical frequency domain transmit signals 425 may be provided for example from a storage medium. Said storage medium may be an internal or an external component with respect to receiver 400. An estimated transmitted signal 430 may optionally be provided by signal detection circuitry 420.

The complex frequency domain receive signal 415 and/or the complex hypothetical frequency domain transmit signal 425 may each comprise a continuous or discrete signal spectrum as described with respect to Fig. 1. The continuous spectra may be elements of real space $\mathbb{R}$ and comprise information about signal amplitudes. The discrete signal spectra may be elements of complex space C, and comprise discrete frequency points $\lambda_i$ characterized by a real part and the aforementioned imaginary part. In the following, the complex hypothetical frequency domain transmit signal 425 is also denominated as the reference signal.

In an embodiment receiver 400 is comprised by an optical communication system. Said optical communication system comprises an optical transmission channel, e.g. an optical fiber, which is coupled to receiver 400. In other words, receiver 400 may be an optical receiver. In some further embodiments the signal transformation circuitry 405 is configured to transform the received time-domain signal 410 to the complex frequency domain receive signal 415 using a nonlinear signal transformation. Said nonlinear signal transformation may in some further embodiments be a nonlinear Fourier transformation. Hence, receiver 400 may for example be a Nonlinear Fourier Transformation based optical receiver

In the following it is described an exemplary concept for a preprocessing for a NFT based optical receiver. The concept comprises an extension of signal processing in the receiver based on nonlinear Fourier transformation by calculating and exploiting discrete frequency points $\lambda_i$ also in the negative complex plane $(\mathbb{C}^-)$. The discrete frequency points in the positive complex plane $(\mathbb{C}^+)$ may physically resemble solitons of the transmitted signal. A soliton may e.g. be an optical field that does not change during propagation because of a delicate balance between nonlinear and linear effects in a medium such as an optical fiber. A soliton energy may correspond to an imaginary part of a discrete frequency point $\lambda_i$, or in other words, to a distance of the discrete frequency point $\lambda_i$ above the real axis. In an embodiment, the imaginary part of the discrete frequency point $\lambda_i$ may have a negative sign. They may be found in the receiver processing scheme by extending the zero search of the magnitude $|a(\lambda)|$ the spectral function $a(\lambda)$ not only over the positive complex plane but also over the area with negative imaginary part or part of this area.

For the exemplary case of a maximum likelihood nonlinear spectrum detection scheme the discrete frequency points $\lambda_i$ having a negative imaginary part are used for several purposes. Firstly, these points are used for removing critical parts (peaks) in spectra prior to the comparison of the continuous spectrum of received and reference signal, e.g. by looking for a minimum mean Euclidean distance $\min<(q-qref,i)^2>$. Secondly, these points are used when comparing the discrete spectra of received and reference signal $\min[\sum(\lambda_j-\lambda_{j,ref,i})^2]$. This could mean that if a $\lambda_{j,ref}$ within a predefined limit to the real axis exists and no close counterpart is found in the signal's discrete spectrum, then a $\lambda_j$ of the received signal is also taken from a number of discrete frequency points $\lambda_j$ with negative real part which is within said predefined limit to the real axis.

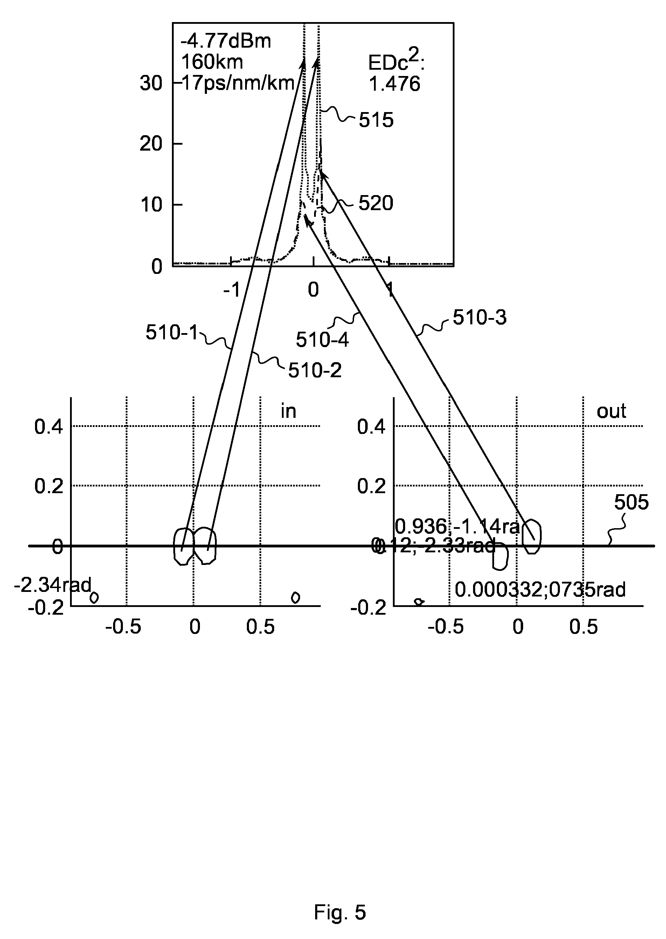

Even though a zero (or, in mathematical terms, a null) of $a(\lambda)$ may only have a physical meaning for $\lambda$ in the upper complex plane $(\mathbb{C}^+)$, numerical simulations of a spectral coefficient $|a(\lambda)|$ (also compare Fig.1) exhibit a number of observations, which are explained with respect to Fig. 5. The top graphic in Fig. 5 represents the continuous spectra of the transmitted signal (solid line 515) and the received signal (dashed line 520). The bottom graphics in Fig. 5 represent the discrete spectra of the transmitted signal (left) and the received signal (right) in the complex plane. It is observed that the discrete frequency points also appear in the negative complex plane (see Fig. 5, bottom graphics). A horizontal line 505 marks $\text{Im}(\lambda)=0$. It is further observed that the zeros of $|a(\lambda)|$ continuously move up if the launch power is increased. It is also observed that if the zeros cross the real axis (horizontal line 505 in Fig. 5) they lead to the high peaks observed in the continuous spectrum, which is indicated by arrows 510-1; 510-2; 510-3; 510-4.

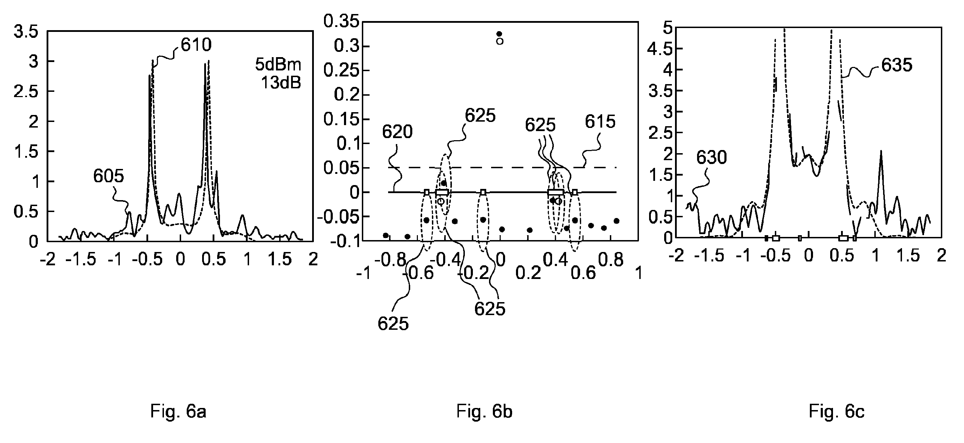

In some exemplary embodiments it may become possible to remove the error-prone peaks prior to the calculation of $<(q-q_{ref,i})^2>$. According to a first embodiment, the signal detection circuitry is configured to exclude a predefined spectral range from the spectral ranges for the comparison if a difference between the hypothetical complex frequency domain transmit signal and the complex frequency-domain receive signal within the predefined spectral range exceeds a predetermined threshold. In other words, modified continuous spectra $q_m$ and $q_{refm}$ are generated where the parts fulfilling a condition $|q|>$ threshold (e.g. =1) are removed. Fig. 6a shows the continuous spectra for the frequency domain received signal (solid line 605) and the hypothetical frequency domain transmit signal (dashed line 610). The difference may also be regarded as a distance between two complex frequency-domain signals in real space. Differential values are calculated over a total frequency range, and parts of the range where the differential value exceeds the predetermined threshold are removed prior to further comparison.

According to a second embodiment, the signal detection circuitry is configured to determine a frequency corresponding to an imaginary part of the complex frequency domain receive signal and/or the complex hypothetical frequency domain transmit signal below a predefined threshold. In some of these embodiments the signal detection circuitry is configured to exclude a predefined spectral range around the determined frequency from the spectral ranges for the comparison. In some further embodiments the determined frequency corresponds to a complex number value and the excluded spectral range lies within a predefined radius around the complex number value. The complex number value may correspond to a discrete frequency point of the hypothetical transmitted complex frequency domain signal or the received complex frequency domain signal. In other words the parts at real frequency points $\lambda$ which are cut by a radius R around discrete spectral points. In one example displayed in Fig. 6b R=0.05. Therein, discrete spectral points with positive and negative real parts are considered. In Fig. 6b, discrete spectral points are considered if they are below a dashed line 615 which indicates a distance of less than 0.05 from the real axis 620. Spectral ranges corresponding to sections of the real axis 620 that lie within the dashed circles 625 (in the following denoted as critical ranges) are removed prior to further comparison. The circles 625 in Fig. 6b have a radius R=0.05 in one example, however, the radius R may be customized according to a desired exactness of a result in another embodiment.

Turning now to Fig. 6c, the modified continuous spectra for the frequency domain received signal (solid line 630) and the hypothetical frequency domain transmit signal (dashed line 635) after removing the critical ranges are shown. It becomes visible that the method described with respect to Fig. 6b may offer a possibility to remove peaks in the continuous spectra that may otherwise lead to errors.

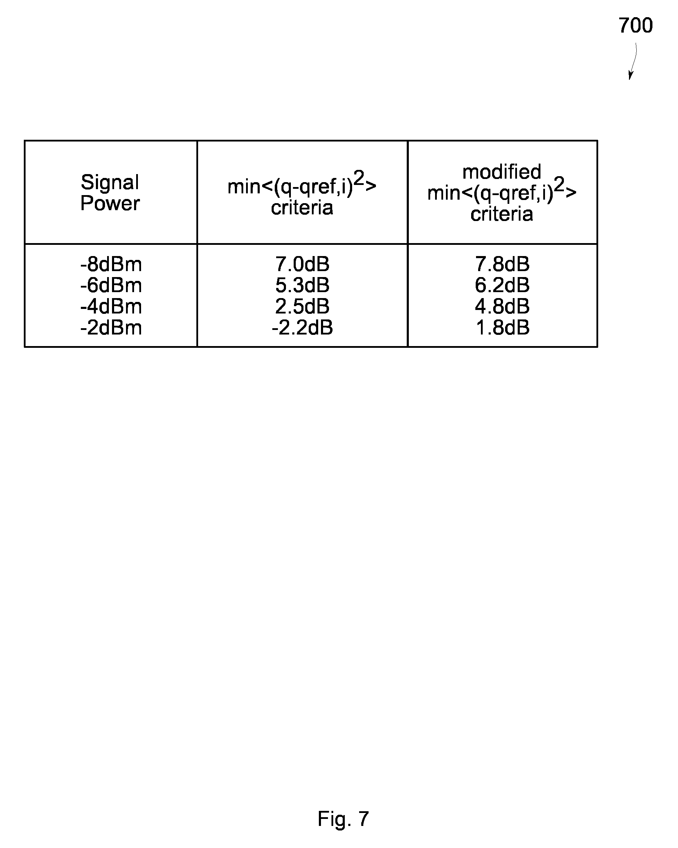

Exemplary bit error ratios (BER) $Q^2$ are shown in a table 700 in Fig. 7. Table 700 presents different signal launch power values considering 3 x 80 km single-mode fiber (SMF) in the left column. The BER is presented as quadratic Q-factor as dB values for decision on $\min<(q-q_{ref,i})^2>$ in the center column, and the BER for the improved modified proposed above, which is based on $\min<(q_m-q_{refm,i})^2>$ in the right column. The higher dB values in the right column $(\min<(q_m-q_{refm,i})^2>)$ are corresponding to a lower BER and thus demonstrate that the cutting of spectral peaks may improve the BER.

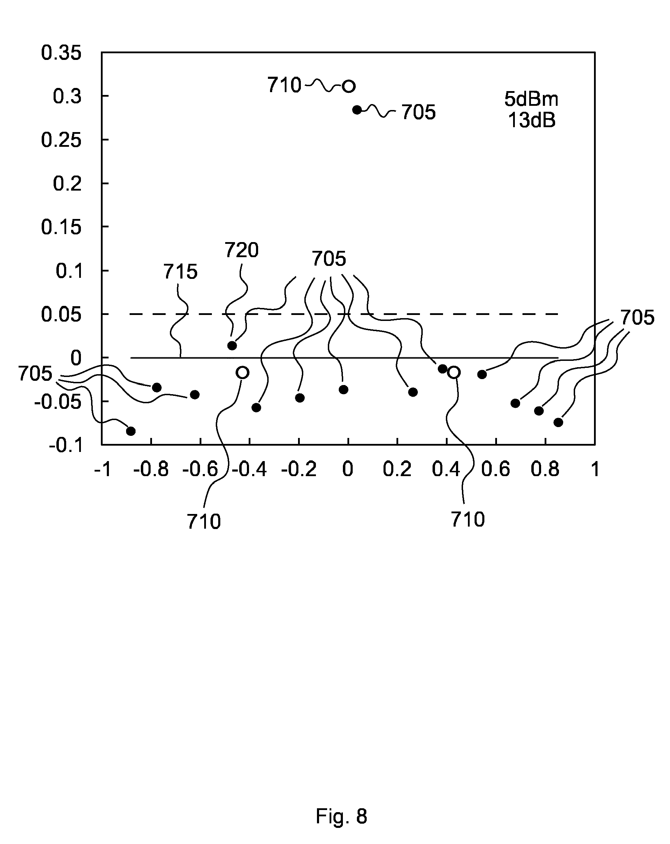

In some embodiments the signal detection circuitry is configured to determine an integrated value of a difference between the hypothetical complex frequency domain transmit signal and the complex frequency-domain receive signal in the one or more spectral ranges for the comparison. In other words, in a decision based on discrete spectra a minimum mean difference between reference sequence and received spectrum is looked for. Fig. 8 shows the discrete spectra of the complex frequency-domain receive signal as dots 705 and the hypothetical complex frequency domain transmit signal displayed as circlets 710. In some further embodiments the signal detection circuitry is configured to determine a further integrated value of a difference between a further complex hypothetical frequency domain transmit signal and the complex frequency-domain receive signal in the one or more spectral ranges. The signal detection circuitry is further configured to provide the hypothetical complex frequency domain transmit signal or the further complex hypothetical frequency domain transmit signal based on a comparison of the integrated value with the further integrated value. In other words, the decision is the minimum of the sum $\sum(\lambda_j - \lambda_{j,ref,i})^2$ of all differences between reference spectrum points and closest received signal points: $\min[\sum(\lambda_j - \lambda_{j,ref,i})^2]$.

In some embodiments the signal detection circuitry is configured to determine a first frequency point of the complex frequency domain receive signal corresponding to a first complex number value, a second frequency point of the complex hypothetical frequency domain transmit signal corresponding to a second complex number value, and an Euclidean distance between the first and second frequency points for the comparison. In some further embodiments the signal detection circuitry is configured to determine a third frequency point of a further complex hypothetical frequency domain transmit signal corresponding to a third complex number value. The signal detection circuitry is further configured to provide the complex hypothetical frequency domain transmit signal or the further complex hypothetical frequency domain transmit signal based on a comparison of the Euclidean distance between the first and second frequency points with an Euclidean distance between the first and third frequency points. In other words, a discrete frequency point of a received signal is compared to one or more discrete frequency points of one or more hypothetical transmit signals. Therein, points with a negative imaginary part are also considered. A decision for one of the hypothetical transmit signals is based on a minimum in distance from the discrete frequency point of the received signal. Fig. 8 illustrates, that even though the two lower reference points (circlets 710) are slightly below zero (indicated as a solid line 715), the decision criteria may use them and calculate the difference to the next closest received signal points (dots 705). In comparison to a conventional decision, which is based only on the upper single point, a conflict in decision, which may arise since a slightly positive signal point 720 (element of $C^+$) above -0.45 has no reference counterpart (circlets 710) in the $\mathbb{C}^+$, may be avoided by some embodiments.

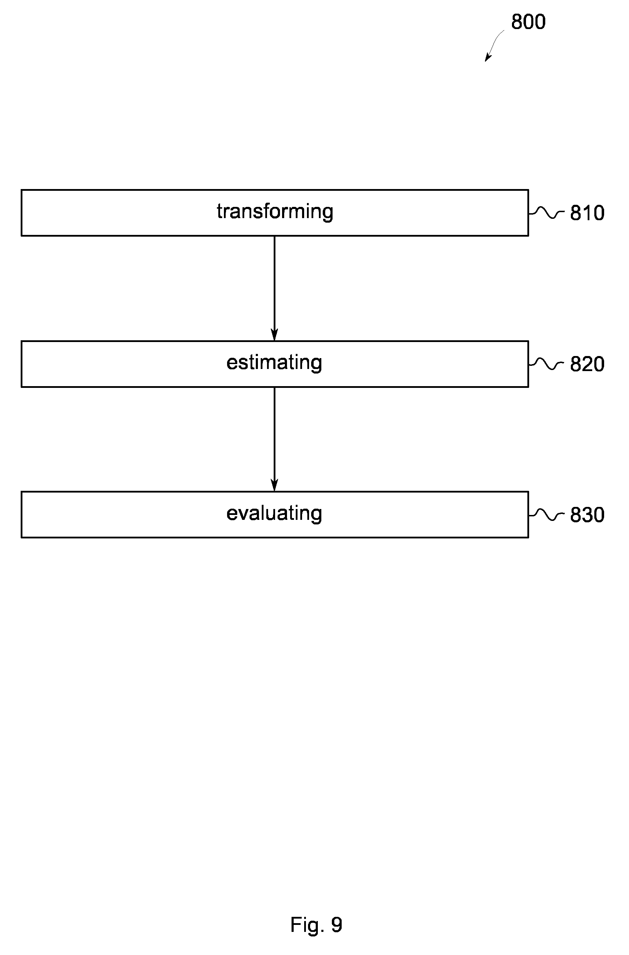

Fig. 9 further shows a flow chart of a method 800 for a receiver. The method 800 comprises transforming 810 a received time-domain signal to a complex frequency domain receive signal. The method 800 also comprises estimating 820 a transmitted signal based on a comparison between a hypothetical complex frequency domain transmit signal and the complex frequency-domain receive signal in one or more spectral ranges. The method 800 further comprises evaluating 830 an imaginary part of the complex frequency domain receive signal and/or the complex hypothetical frequency domain transmit signal to determine the one or more spectral ranges for the comparison.

Embodiments may offer a possibility to improve digital signal processing and improve reliability of an optical communication system. Errors arising due to nonlinearity effects or other transmission errors occurring in optical signals may be systematically removed during preprocessing of a received signal with an exemplary optical receiver, which in turn may improve signal quality.

A further embodiment is a computer readable storage medium storing instructions which, when executed by a computer, cause the computer to implement one of the methods described herein. Other embodiments are a computer program or a computer program product having a program code for performing any one of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the present disclosure. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

Moreover, any functional block described herein may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. Receiver (400), comprising:

   a signal transformation circuitry (405) configured to transform a received time-domain signal (410) to a complex frequency domain receive signal (415); and
   a signal detection circuitry (420) configured to estimate a transmitted signal based on a comparison between a hypothetical complex frequency domain transmit signal (425) and the complex frequency-domain receive signal (415) in one or more spectral ranges,
   wherein the signal detection circuitry (420) is configured to evaluate an imaginary part of the complex frequency domain receive signal (415) and/or the complex hypothetical frequency domain transmit signal (425) to determine the one or more spectral ranges for the comparison.

2. The receiver (400) of claim 1, wherein the signal transformation circuitry (405) configured to transform the received time-domain signal (410) to the complex frequency domain receive signal (415) using a nonlinear signal transformation.

3. The receiver (400) of claim 2, wherein the nonlinear signal transformation is a nonlinear Fourier transformation.

4. The receiver (400) of claim 1, wherein the signal detection circuitry (420) is configured to determine a frequency corresponding to an imaginary part of the complex frequency domain receive signal (415) and/or the complex hypothetical frequency domain transmit signal (425) below a predefined threshold.

5. The receiver (400) of claim 4, wherein the signal detection circuitry (420) is configured to exclude a predefined spectral range around the determined frequency from the spectral ranges for the comparison.

6. The receiver (400) of claim 5, wherein the determined frequency corresponds to a complex number value and the excluded spectral range lies within a predefined radius around the complex number value.

7. The receiver (400) of claim 4, wherein the imaginary part has a negative sign.

8. The receiver (400) of claim 7, wherein the signal detection circuitry (420) is configured to determine a first frequency point of the complex frequency domain receive signal (415) corresponding to a first complex number value, a second frequency point of the complex hypothetical frequency domain transmit signal (425) corresponding to a second complex number value, and an Euclidean distance between the first and second frequency points for the comparison.

9. The receiver (400) of claim 8, wherein the signal detection circuitry (420) is configured to determine a third frequency point of a further complex hypothetical frequency domain transmit signal corresponding to a third complex number value, and to provide the complex hypothetical frequency domain transmit signal (425) or the further complex hypothetical frequency domain transmit signal based on a comparison of the Euclidean distance between the first and second frequency points with an Euclidean distance between the first and third frequency points.

10. The receiver (400) of claim 1, wherein the signal detection circuitry (420) is configured to exclude a predefined spectral range from the spectral ranges for the comparison if a difference between the hypothetical complex frequency domain transmit signal (425) and the complex frequency-domain receive signal (415) within the predefined spectral range exceeds a predetermined threshold.

11. The receiver (400) of claim 1, wherein the signal detection circuitry (420) is configured to determine an integrated value of a difference between the hypothetical complex frequency domain transmit signal (425) and the complex frequency-domain receive signal (415) in the one or more spectral ranges for the comparison.

12. The receiver (400) of claim 11, wherein the signal detection circuitry (420) is configured to determine a further integrated value of a difference between a further complex hypothetical frequency domain transmit signal and the complex frequency-domain receive signal (415) in the one or more spectral ranges, and to provide the hypothetical complex frequency domain transmit signal (425) or the further complex hypothetical frequency domain transmit signal based on a comparison of the integrated value with the further integrated value.

13. Optical communication system, comprising
an optical transmission channel, and
the receiver (400) of claim 1 coupled to the optical transmission channel.

14. Method (800) for a receiver, comprising:

    transforming (810) a received time-domain signal to a complex frequency domain receive signal;
    estimating (820) a transmitted signal based on a comparison between a hypothetical complex frequency domain transmit signal and the complex frequency-domain receive signal in one or more spectral ranges,
    evaluating (830) an imaginary part of the complex frequency domain receive signal and/or the complex hypothetical frequency domain transmit signal to determine the one or more spectral ranges for the comparison.

15. A computer program having a program code for performing the method of claim 14, when the computer program is executed on a programmable hardware device.

**Amended claims in accordance with Rule 137(2) EPC.**

1. Receiver (400), comprising:

    a signal transformation circuitry (405) configured to transform, using a nonlinear Fourier transform, a received time-domain signal (410) to a complex frequency domain receive signal (415) comprising a real-valued spectral part comprising real frequencies, and a complex-valued spectral part comprising complex frequencies; and
    a signal detection circuitry (420) configured to estimate a transmitted signal at least based on a comparison between a real-valued spectral part of a hypothetical complex frequency domain transmit signal (425) and the real-valued spectral part of the complex frequency-domain receive signal (415) in one or more spectral ranges, wherein the signal detection circuitry (420) is configured to evaluate at least an imaginary part of the complex-valued spectral part of the complex frequency domain receive signal (415) and/or the complex hypothetical frequency domain transmit signal (425) to determine the one or more spectral ranges for the comparison.

2. The receiver (400) of claim 1, wherein the signal detection circuitry (420) is configured to determine a frequency corresponding to an imaginary part of the complex frequency domain receive signal (415) and/or the complex hypothetical frequency domain transmit signal (425) below a predefined threshold.

3. The receiver (400) of claim 2, wherein the signal detection circuitry (420) is configured to exclude a predefined spectral range around the determined frequency from the spectral ranges for the comparison.

4. The receiver (400) of claim 3, wherein the determined frequency corresponds to a complex number value and the excluded spectral range lies within a predefined radius around the complex number value.

5. The receiver (400) of claim 2, wherein the imaginary part has a negative sign.

6. The receiver (400) of claim 5, wherein the signal detection circuitry (420) is configured to determine a first frequency point of the complex frequency domain receive signal (415) corresponding to a first complex number value, a second frequency point of the complex hypothetical frequency domain transmit signal (425) corresponding to a second complex number value, and an Euclidean distance between the first and second frequency points for the comparison.

7. The receiver (400) of claim 6, wherein the signal detection circuitry (420) is configured to determine a third frequency point of a further complex hypothetical frequency domain transmit signal corresponding to a third complex number value, and to provide the complex hypothetical frequency domain transmit signal (425) or the further complex hypothetical frequency domain transmit signal based on a comparison of the Euclidean distance between the first and second frequency points with an Euclidean distance between the first and third frequency points.

8. The receiver (400) of claim 1, wherein the signal detection circuitry (420) is configured to determine an integrated value of a difference between the hypothetical complex frequency domain transmit signal (425) and the complex frequency-domain receive signal (415) in the one or more spectral ranges for the comparison.

9. The receiver (400) of claim 8, wherein the signal detection circuitry (420) is configured to determine a further integrated value of a difference between a further complex hypothetical frequency domain transmit signal and the complex frequency-domain receive signal (415) in the one or more spectral ranges, and to provide the hypothetical complex frequency domain transmit signal (425) or the further complex hypothetical frequency domain transmit signal based on a comparison of the integrated value with the further integrated value.

10. Receiver (400), comprising:

    a signal transformation circuitry (405) configured to transform, using a nonlinear Fourier transform, a received time-domain signal (410) to a complex frequency domain receive signal (415) comprising a real-valued spectral part comprising real frequencies; and a complex-valued spectral part comprising complex frequencies; and
    a signal detection circuitry (420) configured to estimate a transmitted signal at least based on a comparison between a real-valued spectral part of a hypothetical complex frequency domain transmit signal (425) and the real-valued spectral part of the complex frequency-domain receive signal (415) in one or more spectral ranges,

    wherein the signal detection circuitry (420) is configured to exclude a predefined spectral range from the spectral ranges for the comparison if a difference between the hypothetical complex frequency domain transmit signal (425) and the complex frequency-domain receive signal (415) within the predefined spectral range exceeds a predetermined threshold.

11. Optical communication system, comprising
    an optical transmission channel, and
    the receiver (400) of claim 1 coupled to the optical transmission channel.

12. Method (800) for a receiver, comprising:

    transforming (810), using a nonlinear Fourier transform, a received time-domain signal to a complex frequency domain receive signal comprising a real-valued spectral part comprising real frequencies, and a complex-valued spectral part comprising complex frequencies;
    estimating (820) a transmitted signal at least based on a comparison between a real-valued spectral part of a hypothetical complex frequency domain transmit signal and the real-valued spectral part of the complex frequency-domain receive signal in one or more spectral ranges,
evaluating (830) at least an imaginary part of the complex-valued spectral part of the complex frequency domain receive signal and/or the complex hypothetical frequency domain transmit signal to determine the one or more spectral ranges for the comparison.

13. A computer program having a program code for performing the method of claim 12, when the computer program is executed on a programmable hardware device.

Fig. 1

Fig. 2

Fig. 3b

Fig. 3a

Fig. 4

Fig. 5

Fig. 6a

Fig. 6b

Fig. 6c

700

| Signal Power | $\min<(q-qref,i)^2>$ criteria | modified $\min<(q-qref,i)^2>$ criteria |
|---|---|---|
| -8dBm | 7.0dB | 7.8dB |
| -6dBm | 5.3dB | 6.2dB |
| -4dBm | 2.5dB | 4.8dB |
| -2dBm | -2.2dB | 1.8dB |

Fig. 7

Fig. 8

800

```
┌──────────────────────────────────────┐
│            transforming              │ ～ 810
└──────────────────────────────────────┘
                    │
                    ▼
┌──────────────────────────────────────┐
│             estimating               │ ～ 820
└──────────────────────────────────────┘
                    │
                    ▼
┌──────────────────────────────────────┐
│             evaluating               │ ～ 830
└──────────────────────────────────────┘
```

Fig. 9

Europäisches
Patentamt

European
Patent Office

Office européen
des brevets

## EUROPEAN SEARCH REPORT

Application Number

EP 14 30 6361

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOUSEFI MANSOOR I ET AL: "Information Transmission Using the Nonlinear Fourier Transform, Part III: Spectrum Modulation", IEEE TRANSACTIONS ON INFORMATION THEORY, IEEE PRESS, USA, vol. 60, no. 7, 1 July 2014 (2014-07-01), pages 4346-4369, XP011550424, ISSN: 0018-9448, DOI: 10.1109/TIT.2014.2321155 [retrieved on 2014-06-12] * Section V.D * | 1,13-15 | INV. H04L27/26 |
| A | YOUSEFI MANSOOR I ET AL: "Information Transmission Using the Nonlinear Fourier Transform, Part II: Numerical Methods", IEEE TRANSACTIONS ON INFORMATION THEORY, IEEE PRESS, USA, vol. 60, no. 7, 1 July 2014 (2014-07-01), pages 4329-4345, XP011550419, ISSN: 0018-9448, DOI: 10.1109/TIT.2014.2321151 [retrieved on 2014-06-12] * Sections II. and III. * | 1-15 | |
| T | BULOW HENNING: "Experimental assessment of nonlinear fourier transformation based detection under fiber nonlinearity", 2014 THE EUROPEAN CONFERENCE ON OPTICAL COMMUNICATION (ECOC), SYSTEMATIC PARIS REGION SYSTEMS AND ICT CLUSTER, 21 September 2014 (2014-09-21), pages 1-3, XP032689351, DOI: 10.1109/ECOC.2014.6963840 [retrieved on 2014-11-20] * the whole document * | 1-15 | TECHNICAL FIELDS SEARCHED (IPC) H04L |

The present search report has been drawn up for all claims

| Place of search | Date of completion of the search | Examiner |
|---|---|---|
| Berlin | 13 March 2015 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)